# EUROPÄISCHE PATENTSCHRIFT

(11) **EP 2 808 509 B1**
(45) Veröffentlichungstag und Bekanntmachung des Hinweises auf die Patenterteilung: **21.02.2018**
(21) Anmeldenummer: 14169123.8
(22) Anmeldetag: 20.05.2014
(51) Int. Cl.: F01N 3/20, F01N 3/10, F01N 13/00

(54) **Abgasanlage mit Abgasrohr und Dosiereinrichtung zur Dosierung eines Reagenzes sowie Kraftfahrzeug mit einer solchen Abgasanlage**
Exhaust system with exhaust pipe and dosing device for dosing a reagent, and motor vehicle having an exhaust system of the said type
Système d'échappement ayant un tuyau d'échappement et un dispositif de dosage d'un réactif, ainsi que véhicule automobile équipé d'un tel système d'échappement

(30) Priorität: 31.05.2013 DE 102013009179
(43) Veröffentlichungstag der Anmeldung: 03.12.2014
(73) Patentinhaber: Volkswagen Aktiengesellschaft, 38440 Wolfsburg (DE)
(72) Erfinder: Schütte, Dr. Torsten, 27798 Hude (DE)

(56) Entgegenhaltungen:
- WO-A1-2013/178321
- WO-A2-2008/040363
- DE-A1-102007 048 560
- DE-A1-102009 041 592
- DE-A1-102010 055 642
- DE-A1-102011 077 955
- FR-A1- 2 966 515
- JP-A- 2005 076 460
- US-A1- 2010 170 234
- US-A1- 2011 079 003

## Beschreibung

Die Erfindung betrifft eine Abgasanlage mit einem Abgasrohr sowie einer Dosiereinrichtung zur Dosierung eines flüssigen oder gasförmigen Reagenzes in das Abgasrohr sowie ein Kraftfahrzeug mit einer solchen Abgasanlage. Insbesondere betrifft die Erfindung eine SCR-Abgasanlage, bei der die Dosiereinrichtung ein Reduktionsmittel für einen SCR-Katalysators in das Abgasrohr dosiert.

Verbrennungsmotoren, die zeitweise oder überwiegend mit einem mageren Luft-KraftstoffGemisch betrieben werden, produzieren Stickoxide NO_{X} (hauptsächlich NO₂ und NO), die NO_{X}-re-duzierende Maßnahmen erforderlich machen. Eine motorische Maßnahme, um die NO_{X}-Rohemission im Abgas zu reduzieren, stellt die Abgasrückführung dar, bei der ein Teil des Abgases des Verbrennungsmotors in die Verbrennungsluft rückgeführt wird, wodurch die Verbrennungstemperaturen gesenkt und somit die NO_{X}-Entstehung reduziert wird. Die Abgasrückführung ist jedoch nicht immer ausreichend, um gesetzliche NO_{X}-Grenzwerte einzuhalten, weswegen zusätzlich eine aktive Abgasnachbehandlung erforderlich ist, welche die NO_{X}-Endemission senkt. Eine bekannte NO_{X}-Abgasnachbehandlung sieht den Einsatz von NO_{X}-Speicherkatalysatoren vor, die im mageren Betrieb (bei λ > 1) Stickoxide in Form von Nitraten speichern und in kurzen Intervallen mit einer fetten Abgasatmosphäre (λ < 1) die gespeicherten Stickoxide desorbieren und in Gegenwart der im fetten Abgas vorhandenen Reduktionsmittel zu Stickstoff N₂ reduzieren.

Als weiterer Ansatz zur Konvertierung von Stickoxiden in Abgasen magerlauffähiger Verbrennungsmotoren ist der Einsatz von Katalysatorsystemen bekannt, die nach dem Prinzip der selektiven katalytischen Reduktion (SCR für selective catalytic reduction) arbeiten. Diese Systeme umfassen zumindest einen SCR-Katalysator, der in Gegenwart eines dem Abgas stromauf des SCR-Katalysators kontinuierlich zugeführten Reduktionsmittels die Stickoxide des Abgases in Stickstoff und Wasser umwandelt. Die Bezeichnung "selektiv" in diesem Verfahren bedeutet, dass das eingebrachte Reduktionsmittel trotz der Gegenwart von molekularem Sauerstoff bevorzugt mit den Stickoxiden reagiert. Dies grenzt das SCR-Verfahren von nicht selektiven Verfahren ab, die üblicherweise Kohlenwasserstoffe als Reduktionsmittel verwenden. In heutigen SCR-Reduktionsverfahren wird üblicherweise Ammoniak NH₃ als Reduktionsmittel verwendet, wobei als Ammoniakträger Direktsubstanzen, Vorläufersubstanzen oder reversible Speichersubstanzen zum Einsatz kommen können. Die Ammoniakdirektsubstanzen umfassen Ammoniakgas oder wässrige Ammoniaklösungen, die dem Abgasstrom direkt zudosiert werden. Für mobile Anwendungen sind die Ammoniakdirektsubstanzen aufgrund ihres Gefahrenpotentials problematisch, weswegen Vorläuferverbindungen (Reduktionsmittelträger) verwendet werden, die Ammoniak im Wege der Thermolyse und Hydrolyse freisetzen. Zu den Vorläuferverbindungen zählen Harnstoff, Ammoniumcarbamat, Cyanursäure, und Ammoniumformiat, die zum Teil als Feststoff und zum Teil in Form wässriger Lösungen eingesetzt werden, wobei im Fall von Harnstoff beide Formen üblich sind. Für mobile Anwendungen ist derzeit die Verwendung wässriger Harnstofflösungen am verbreitetsten.

Bei der Reduktionsmitteldosierung ist es unvermeidbar, dass Teile des Sprays sich an den Innenwänden der Abgasanlage oder an Bauteilen, wie Dosierventil und Mischerelement niederschlagen. Trifft das Reduktionsmittel auf kühle Flächen, kann aufgrund der niedrigen Verdampfungsrate und hohen Verweilzeit eine Wandfilmbildung und von dieser ausgehend eine Ablagerung entstehen. Der Harnstoffanteil des Wandfilms kristallisiert durch Verdampfung des Wasseranteils aus. Ablagerungsschwerpunkte treten in besonders kalten Bereichen, wie der Eindosierungsstelle oder des Dosierventils auf. Dosierventile können beispielsweise durch Undichtigkeiten zur Bildung von Ablagerungen beitragen. Ablagerungen an Innenwänden können neben einer zu kalten Wandfläche ebenfalls durch eine inhomogene Strömungsverteilung hervorgerufen werden. Bestimmte Strömungsverhältnisse, insbesondere im Übergang der Eindosierungsstelle zur Abgasanlage, können zu einer Ablenkung des Reduktionsmittelsprays führen, was zu einem höheren Niederschlag an der Wand und somit zur Ablagerung führt. Analog dazu verursacht eine inhomogene Sprayaufbereitung bei bestimmten geometrischen Parametern des Mischerelements Ablagerungen. Unter dauerhafter Temperatureinwirkung kann sich der Harnstoff in Folgeprodukte umwandeln. Die Dauer und Höhe der Temperaturbeaufschlagung bestimmt den Poiymerisationsgrad. Ablagerungen bestehen typischerweise aus Harnstoff und den Harnstofffolgeprodukten Biuret, Cyanursäure, Ammelid, Ammelin und Melamin. Ablagerungen können die Reduktionsmitteldosierung beinträchtigen, so dass sich der Homogenisierungsgrad verschlechtert und Ammoniakschlupf als Folge auftritt. Bei besonders starker Ablagerungsbildung in der Eindosierstelle kann die Dosierung vollständig behindert werden, was im Extremfall zum Systemausfall führen kann.

In DE 10 2010 055 642 A1 werden grundlegende Zusammenhänge und Beobachtungen zur Ablagerungsbildung aktueller Technologien der SCR-Gemischaufbereitung beschrieben. Besonders kritisch verhält sich demnach der Bereich der Flanschverbindung des SCR-Dosiermoduls an den Abgaskanal. Zur Vermeidung solcher Ablagerungen wird vorgeschlagen, die Dosierfrequenz und den Dosierdruck der Dosiereinrichtung in geeigneter Weise zu steuern.

Ein weiteres Problem stellt die thermische Beanspruchung des Dosierventils durch den heißen Abgasstrom dar. Luftgekühlte Dosierventile sind daher häufig in seitlichen Stutzen des Abgaskanals angeordnet, damit das Ventil nicht unmittelbar dem heißen Abgas ausgesetzt ist (s. z.B. DE 10 2005 061 145 A1). Ebenfalls zum thermischen Schutz schlagen DE 10 2009 027 713 A1 und DE 10 2009 027 745 A1die Anordnung zweier, durch einen Luftspalt getrennter Schutzbleche zwischen Dosiermodul und Abgasrohr vor. Die Schutzbleche sollen ferner die Abscheidung der Harnstofflösung an kühleren Bereichen des Abgasrohres verhindern.

Im Dokument WO 2008/040363 A2 wird eine Dosiereinrichtung mit einer Temperaturregelung beschrieben, mit welcher tröpfchenförmiger Harnstoff in eine Abgasanlage eingespritzt werden kann. In bestimmten Ausführungsformen schließt eine Endfläche der Dosiereinrichtung bündig in einem Aufnahmeabschnitt des Abgasrohres ab. In diesem Zusammenhang ist auch auf das Dokument DE 10 2012 0-10 878 A1 beziehungsweise WO 2013/178321 A1 verwiesen.

Im Dokument US 2010/0170234 A1 wird eine Abgasanlage mit einem zur Durchleitung eines Abgases ausgebildeten Abgasrohr sowie eine Dosiereinrichtung zur Dosierung eines flüssigen oder gasförmigen Reagenzes in das Abgasrohr offenbart. Das Abgasrohr weist einen aus dem Rohr sich auswölbenden Aufnahmeabschnitt auf, in welchem die Dosiereinrichtung unter einem spitzen Winkel gegenüber der Strömungsrichtung des Abgases aufgenommen ist. Die abgasseitige Oberfläche des Aufnahmeabschnitts und die abgasseitige Endfläche der Dosiereinrichtung schließen bündig miteinander ab.

Die nachveröffentliche WO 2013/178321 A1 offenbart eine Harnstoff-Dosiereinheit für eine SCR-Abgasanlage eines Fahrzeugs, bei der die Injektorspitze der Dosiereinheit etwa bündig mit einem Flanschbauteil abschließt, welches die Dosiereinheit befestigt.

Der Erfindung liegt nun die Aufgabe zugrunde, eine Abgasanlage, insbesondere eine SCR-Abgasanlage, vorzuschlagen, bei der die Entstehung von Ablagerungen eines zugeführten Reagenzes, insbesondere eines SCR-Reduktionsmittels, gegenüber bekannten Konzepten vermindert oder sogar vermieden werden.

Diese Aufgabe wird durch eine Abgasanlage sowie ein Fahrzeug mit einer solchen mit den Merkmalen der unabhängigen Ansprüche gelöst.

Die erfindungsgemäße Abgasanlage umfasst ein zur Durchleitung eines Abgases ausgebildetes Abgasrohr. Die Abgasanlage umfasst ferner eine Dosiereinrichtung zur Dosierung eines flüssigen oder gasförmigen Reagenzes in das Abgasrohr. Dabei weist das Abgasrohr einen Aufnahmeabschnitt auf, der zur Aufnahme der Dosiereinrichtung ausgebildet ist. Eine abgasseitige Oberfläche des Aufnahmeabschnitts und eine abgasseitige Endfläche der Dosiereinrichtung schließen im Wesentlichen bündig miteinander ab. Erfindungsgemäß ist eine Einspritzachse der Dosiereinrichtung parallel zu einer Hauptströmungsachse des Abgasrohrs ausgerichtet.

Dabei wird im Rahmen der Erfindung mit dem Begriff "abgasseitig" stets diejenige Seite oder Fläche eines Elements verstanden, welche dem Abgas zugewandt ist. Der Begriff "bündig miteinander abschließen" bedeutet, dass an der Grenzlinie zwischen der Endfläche der Dosiereinrichtung sowie der abgasseitigen Oberfläche des Aufnahmeabschnitts keines der beiden Elemente das andere überragt und somit ein stufenloser Übergang von einem Element zu dem anderen realisiert ist. Mit anderen Worten liegt die abgasseitige Oberfläche des Aufnahmeabschnitts des Abgasrohrs und die abgasseitige Endfläche der Dosiereinrichtung auf gleicher Ebene.

Durch diese erfindungsgemäße Ausgestaltung werden somit abgasseitige Kanten zwischen Dosiermodul und Aufnahmeabschnitt des Abgasrohrs vermieden. Derartige Kanten führen im Stand der Technik zu Störstellen, an denen Ablagerungen des zudosierten Reagenzes entstehen. Zudem wird die Ausbildung von Schadräumen oder Todvolumina vermieden, in denen eine Rezirkulation und Ablenkung von Sekundärtropfen des Reagenzes Ablagerungen verursachen.

Vorzugsweise bilden die abgasseitige Endfläche der Dosiereinrichtung und die abgasseitige Oberfläche des Aufnahmeabschnitts zusammen eine durchgehend stetige, dem Abgas zugewandte Fläche aus. Darunter wird verstanden, dass nicht nur der Übergang von Dosiereinrichtung und Aufnahmeabschnitt kantenfrei ausgebildet ist, sondern dass auch darüber hinaus beide Elemente keine in die Abgasanlage hineinragenden Teile aufweisen. Somit ist die gesamte, durch die Endfläche der Dosiereinrichtung und die abgasseitige Oberfläche des Aufnahmeabschnitts ausgebildete Fläche frei von Kanten, Vorsprüngen, Sicken, Hinterschneidungen und dergleichen. Es versteht sich, dass selbstredend die abgasseitige Endfläche der Dosiereinrichtung eine Einspritzöffnung aufweist, die eine gewisse Ausnahme von der durchgehend stetigen Kontur der ausgebildeten Fläche darstellt. Durch die durchgehend stetige Kontur der durch Dosiereinrichtung und Aufnahmeabschnitt ausgebildeten abgasseitigen Fläche wird im gesamten Bereich dieses Abschnitts gewährleistet, dass keine Störstellen vorhanden sind, in denen sich ein Flüssigkeitsfilm ansammeln und die Ablagerungsbildung begünstigen könnten. In einer speziellen Ausbildung ist die durchgehende, dem Abgas zugewandte Fläche als ebene Fläche ausgebildet.

Gemäß einer bevorzugten Ausgestaltung des Verfahrens bildet der Aufnahmeabschnitt einen Dosiersitz für die Dosiereinrichtung aus. Eine Kontur des Dosiersitzes entspricht dabei einer äußeren Kontur eines abgasseitigen Endabschnitts der Dosiereinrichtung. Mit anderen Worten bildet der Aufnahmeabschnitt beziehungsweise der Dosiersitz die Gestalt des abgasseitigen Endabschnitts der Dosiereinrichtung nach. Dies ermöglicht eine passgenaue Aufnahme der Dosiereinrichtung in dem Aufnahmeabschnitt und vermeidet jegliche Totvolumina (Schadräume) im Bereich der Kontaktfläche zwischen diesen beiden Elementen. Auch hierdurch werden ein hinterströmbares Totvolumen und somit Ablagerungen des dosierten Reagenzes vermieden. Die Dosiereinrichtung weist erfindungsgemäß eine Spritzlochscheibe auf, wobei die abgasseitige Endfläche der Dosiereinrichtung zumindest teilweise durch die Spritzlochscheibe ausgebildet wird. Typischerweise ragt die Spritzlochscheibe von Dosiereinrichtungen bekannter Abgasanlagen in das Abgasrohr hinein und bildet somit Ablagerungspotential für das zudosierte Reagenz. Dieses Problem wird vermieden, wenn die Spritzlochscheibe die abgasseitige Endfläche der Dosiereinrichtung zumindest teilweise ausbildet und somit bündig mit dem Aufnahmeabschnitt abschließt.

Es ist bevorzugt vorgesehen, dass die Dosiereinrichtung eine Kühleinrichtung zur aktiven Kühlung der Dosiereinrichtung aufweist. Im Gegensatz zu passiv- beziehungsweise luftgekühlten Dosiereinrichtungen ermöglicht eine aktive Kühlung größere Freiheitsgrade bezüglich der Anordnungsmöglichkeit der Dosiereinrichtung am Abgasrohr. Es entfällt die Notwendigkeit, luftgekühlte Dosiermodule möglichst thermisch von der Abgasanlage zu entkoppeln, beispielsweise in dem sie in Seitenstutzen des Abgasrohrs angeordnet werden. Daraus ergibt sich die Möglichkeit, die Dosiereinrichtung in einer ablagerungsmindernden Anordnung an das Abgasrohr anzubinden.

Vorzugsweise ist die Kühleinrichtung als ein Kühlmantel ausgebildet, welcher ein Dosierventil der Dosiereinrichtung zumindest teilweise umgibt. Dabei bildet ein abgasseitiges Ende des Kühlmantels vorzugsweise die abgasseitige Endfläche der Dosiereinrichtung, insbesondere zusammen mit der Spritzlochscheibe, zumindest teilweise aus. Durch diese Ausgestaltung wird eine Kühlung der Dosiereinrichtung insbesondere im vorderen, von dem Abgas beaufschlagten Bereich effektiv gekühlt.

In besonders bevorzugter Ausgestaltung der Erfindung ist eine Einspritzachse der Dosiereinrichtung koaxial zu einer Hauptströmungsachse des Abgasrohrs ausgerichtet. Somit entspricht die Sprührichtung der Dosiereinrichtung der Abgasströmungsrichtung. Auf diese Weise wird der Strömungseinfluss des Abgases auf den Dosierstrahl sowie auf Sekundärtropfen des Dosierstrahls verringert. Der Dosierstrahl wird somit nicht durch den Abgasstrom abgelenkt, insbesondere nicht auf die Wand des Abgasrohrs.

In bevorzugter Ausführung weist das Abgasrohr ein Rohrknie oder einen stufenartigen Rohrvorsprung auf, wobei das Rohrknie einen im Wesentlichen orthogonal zur Hauptströmungsachse des Abgasrohrs verlaufenden Abschnitt ausbildet. Dabei ist der Aufnahmeabschnitt für die Dosiereinrichtung im Bereich des orthogonalen Abschnitts angeordnet. Diese Ausbildung ermöglicht in einfacher Weise die Anordnung der Dosiereinrichtung derart, dass seine Einspritzachse parallel zur Hauptströmungsachse des Abgasrohrs ausgerichtet ist.

In bevorzugter Ausführung der Erfindung umfasst die Abgasanlag ferner einen, in dem Abgasrohr stromab der Dosiereinrichtung angeordneten SCR-Katalysator. Demnach ist das durch die Dosiereinrichtung zugeführte Reagenz ein SCR-Reduktionsmittel, insbesondere Ammoniak oder eine Vorläuferverbindung von diesem. Vorzugsweise handelt es sich um Harnstoff in gelöster, insbesondere wässriger Form. Da die üblichen SCR-Reduktionsmittel, insbesondere wässrige Harnstofflösungen, in besonderer Weise zu Ablagerungen im Abgaskanal neigen, entfaltet die vorliegende Erfindung ihre Vorteile bei SCR-Anlagen im besonderen Maße.

Die Erfindung betrifft ferner ein Kraftfahrzeug, welches die erfindungsgemäße Abgasanlage zur Reinigung eines verbrennungsmotorischen Abgases umfasst. Das Kraftfahrzeug weist insbesondere einen Dieselmotor als Antriebsquelle auf. Die Abgasanlage kann vorzugsweise motornah angeordnet sein, so dass die Wärmeenergie des Verbrennungsmotors zur Temperierung der Abgasanlage beiträgt. Das Kraftfahrzeug kann ein Nutzfahrzeug oder (bevorzugt) ein Personenkraftwagen sein.

Die Erfindung kann mit einzelnen Merkmalen oder Kombinationen von Merkmalen gemäß dieser Darstellung realisiert sein. Weitere bevorzugte Ausgestaltungen der Erfindung ergeben sich aus den übrigen, in den abhängigen Ansprüchen genannten Merkmalen.

Die Erfindung wird nachfolgend in Ausführungsbeispielen unter Bezugnahme auf zugehörige Zeichnungen erläutert. Es zeigen:
- Figur 1: schematischer Aufbau einer SCR-Abgasanlage;
- Figur 2: Ausführungen eines Abgasrohrs mit Seitenstutzen gemäß Stand der Technik;
- Figur 3: Anbindung verschiedener, aktiv gekühlter Dosiereinrichtungen an einen Aufnahmeabschnitt eines Abgasrohrs gemäß Stand der Technik;
- Figur 4: Dosiereinrichtung und Aufnahmeabschnitt eines Abgasrohrs gemäß einer bevorzugten Ausgestaltung der Erfindung und
- Figur 5: Anbindung verschiedener Dosiereinrichtungen an einen Aufnahmeabschnitt eines Abgasrohrs gemäß weiteren Ausgestaltungen der Erfindung.

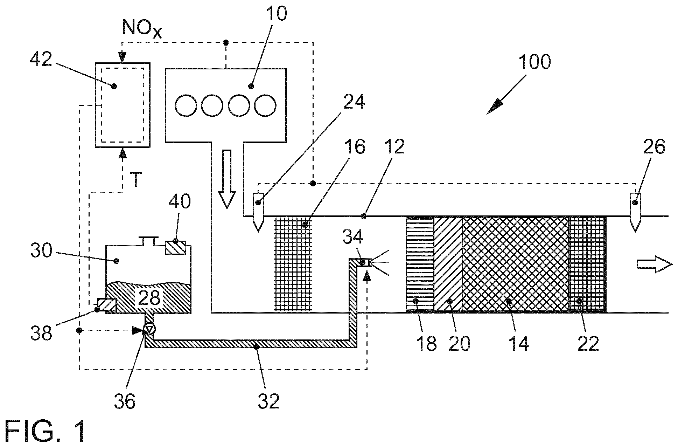

Figur 1 zeigt schematisch eine insgesamt mit 100 bezeichnete Abgasanlage einer überwiegend mager betriebenen Verbrennungskraftmaschine 10, beispielsweise einen Dieselmotor, die mit einer SCR-Katalysatoranlage ausgestattet ist. Diese kann systematisch in ein Abgassystem und in ein fluidführendes System sowie ein Steuerungssystem unterteilt werden.

Das Abgassystem umfasst ein Abgasrohr 12, das zumindest einen SCR-Katalysator 14 aufweist, der in Gegenwart eines Reduktionsmittels, insbesondere Ammoniak NH₃, Stickoxide NO_{X} des Abgases katalytisch umsetzt. Als katalytisch wirksame Substanzen enthält der SCR-Katalysator 14 typischerweise geeignete Übergangsmetallsalze in seiner katalytischen Beschichtung, beispielsweise Vanadium-, Molybdän-, Wolfram-, Mangan- und/oder Eisenoxide. Der SCR-Katalysator 14 kann als Einzelkatalysator ausgeführt sein oder als mehrere hintereinander geschaltete Katalysatorblöcke.

Zur Anhebung des NO₂/NO-Verhältnisses im Abgas und Verbesserung des Wirkungsgrades kann stromauf des SCR-Katalysators 14, insbesondere an einer motornahen Einbaulage, ein Oxidationskatalysator 16 angeordnet sein, der zudem die Aufgabe der Oxidation von unverbrannten Kohlenwasserstoffen und Kohlenmonoxid erfüllen kann. Ferner kann im Bereich einer Mischstrecke stromab einer weiter unten erläuterten Zuführungsstelle für den Reduktionsmittelträger und stromauf des SCR-Katalysators 14 ein Mischelement 18 zur Homogenisierung des zugeführten Reduktionsmittelträgers angeordnet sein. Der Einsatz eines Mischelements 18 ist besonders bei kurzen Mischstrecken von Vorteil, um eine homogene Anströmung des SCR-Katalysators 14 durch das Reduktionsmittel zu erreichen. Stromab des optionalen Mischelements 18 kann darüber hinaus bei Einsatz von Vorläufersubstanzen des Reduktionsmittels, ein Hydrolysekatalysator 20 vorgesehen sein, der insbesondere bei dynamischer Betriebsweise in niederen Lastbereichen sinnvoll ist. Der Hydrolysekatalysator 20 kann wie dargestellt als gesonderter Katalysator oder Katalysatorabschnitt ausgestaltet sein oder als eine zusätzliche Beschichtung auf dem SCR-Katalysator 14. Ein optional dem SCR-Katalysator 14 nachgeschalteter zweiter Oxidationskatalysator 22 (so genannter Sperrkatalysator) setzt gegebenenfalls überschüssiges Ammoniak um, um Ammoniakemissionen zu verringern. Selbstverständlich können weitere, hier nicht dargestellte Abgaselemente vorhanden sein, beispielsweise ein Dieselpartikelfilter.

Zur Steuerung des SCR-Systems kann eine Sensorik in dem Abgasrohr 12 installiert sein, die verschiedene Gassensoren und/oder Temperatursensoren umfassen kann. In der dargestellten Ausführung umfasst die Sensorik einen ersten NO_{X}-Sensor 24, der stromauf des ersten Oxidationskatalysators 16 angeordnet ist und die aktuelle NO_{X}-Rohemission der Verbrennungskraftmaschine 10 misst, sowie einen stromab des SCR-Katalysators 14 angeordneten zweiten NO_{X}-Sensor 26, welcher der Überwachung des SCR-Katalysators 14 dient. Weitere Sensoren, beispielsweise Lambdasonden oder Temperatursensoren können zusätzlich vorgesehen sein.

Das Fluidsystem der SCR-Katalysatoranlage dient der Bevorratung und Dosierung des Reduktionsmittelträgers, wobei nachstehend von Harnstoff als Reduktionsmittelträger ausgegangen wird, das in Form einer wässrigen Harnstofflösung (Vorratslösung) 28 vorliegt. Es versteht sich jedoch, dass im Rahmen der vorliegenden Erfindung auch andere Reduktionsmittelträger, wie Ammoniak in gelöster Form oder eine andere Vorläuferverbindung, wie Ammoniumcarbamat, Cyanursäure oder Ammoniumformiat in Form ihrer wässrigen Lösungen, Einsatz finden können.

Die wässrige Harnstofflösung 28 befindet sich in einem Vorratsbehälter 30, der über eine Förderleitung 32 mit einer Dosiereinrichtung 34 in Verbindung steht. An einer geeigneten Position der Förderleitung 32 ist eine Förderpumpe 36 installiert, die vorzugsweise zur beidseitigen Förderung der Lösung 28 ausgelegt ist. Auf diese Weise baut die Förderpumpe 36 einerseits den notwendigen Systemdruck auf und kann andererseits nach Abstellen des Systems durch Rücksaugen die Förderleitung 32 entleeren. Die Dosiereinrichtung 34 ist über einen weiter unten näher erläuterten Aufnahmeabschnitt des Abgasrohrs 12 direkt mit dem Abgasrohrs 12 verbunden. Ihre Einbauposition im Abgaskanal 12 kann motornah oder motorfern sein.

Der Vorratsbehälter 30 für die Harnstofflösung 28 ist im Allgemeinen dem vorhandenen Bauraum des Fahrzeugs angepasst, so dass auch geteilte Systeme Verwendung finden können. Typischerweise ist in dem Vorratsbehälter 30 ein hier nicht dargestellter Füllstandssensor verbaut, der beispielsweise über eine Leitfähigkeitsmessung den Füllstand überwacht. Zudem ist im Behälter ein Temperatursensor 38 an einer unteren Position angeordnet, so dass dieser die Temperatur der Vorratslösung 28 misst. Fällt die Temperatur der Lösung 28 unter einen vorbestimmten Schwellenwert, so erfolgt eine Beheizung der Vorratslösung 28 mittels einer nicht dargestellten Heizeinrichtung, etwa einer elektrischen Widerstandsheizung, die im Inneren oder Äußeren des Behälters 30 angebracht sein kann. Ebenso können auch die Leitung 32 und die Dosiereinrichtung 34 beheizbar ausgeführt sein. Im dargestellten Beispiel verfügt der Vorratsbehälter 30 über eine Belüftungseinrichtung 40, die beispielsweise als ein gasdurchlässiges Sinterelement ausgestaltet sein kann, das einen beschränkten Gasaustausch zwischen dem Behälter 30 und der Umgebung zulässt, um einem Unterdruck bei abnehmenden Füllstand und einem Überdruck bei Temperaturanstieg im Behälter entgegenzuwirken sowie Höhenunterschiede mit entsprechenden Druckverhältnissen auszugleichen.

Zentrales Element des Steuerungssystems ist ein Steuergerät 42, das die Signale der NO_{X}-Sensoren 24 und 26, des Temperatursensoren 38 und gegebenenfalls weiterer Sensoren empfängt. Das Steuergerät 42 ermittelt in Abhängigkeit der Signale eine benötigte Dosiermenge des Reduktionsmittelträgers und steuert die Förderpumpe 36 sowie die Dosiereinrichtung 34 so an, dass die ermittelte Dosiermenge in den Abgaskanal 12 eingespeist wird, um nach Homogenisierung durch das Mischelement 18 im Hydrolysekatalysator 20 Ammoniak NH₃ freizusetzen, das sodann im SCR-Katalysator 14 eingespeichert wird, um als Reduktionsmittel für die NO_{X}-Reduktion zur Verfügung zu stehen. Grundsätzlich erfolgt - wie im Stand der Technik üblich - die Bestimmung der Dosiermenge bedarfsabhängig. Dabei kann insbesondere ein aktueller Reduktionsmittelbedarf anhand einer mit dem Sensor 24 gemessenen NO_{X}-Konzentration im Abgas bestimmt werden. Alternativ oder zusätzlich lässt sich der Bedarf jedoch auch in Abhängigkeit eines Betriebspunktes der Verbrennungskraftmaschine 10 aus einem gespeicherten Kennfeld ermitteln.

Wie eingangs erläutert, kann es im Betrieb der Anlage jedoch zu Ablagerungen des zugeführten Reduktionsmittels an verschiedenen Bauteilen im Bereich der Dosierungsstelle kommen. Dies betrifft insbesondere eine Spritzlochscheibe der Dosiereinrichtung 34 und die Anschlussstelle der Dosiereinrichtung 34 an das Abgasrohr 12, welche insbesondere als Flanschverbindung realisiert sein kann. In vermindertem Maße und abhängig von der geometrischen Ausgestaltung können auch Ablagerungen an der Innenwand des Abgasrohrs 12 auftreten. Am schwerwiegendsten haben sich jedoch die Ablagerungen im Bereich der Anschlussstelle der Dosiereinrichtung 34 erwiesen.

Die Bildung eines feuchten Wandfilms der eindosierten Reduktionsmittellösung in den Abgaskanal 12 wird als Vorläuferschritt für die Entstehung dauerhafter fester Ablagerungen angesehen. Nach Verdampfen des Lösungsmittels (in der Regel Wasser) kristallisiert das Reduktionsmittel (z.B. Harnstoff) aus und kann durch thermische Beaufschlagung zu Folgeprodukten reagieren. Im Falle der Verwendung einer wässrigen Harnstofflösung bestehen die Ablagerungen zu großen Anteilen aus Harnstoff und Cyanursäure und können geringe Anteile an Biuret, Ammelid, Ammelin sowie Polymerisationsprodukte enthalten. Da die Wandfilmbildung durch niedrige Bauteiltemperaturen begünstigt wird, sind in erster Linie Bauteile von Ablagerungen betroffen, bei denen nie oder nur selten hohe Temperaturen auftreten. Aus dem gleichen Grund werden Ablagerungen verstärkt bei Fahrzeugen gefunden, die nie oder nur selten in hohen Lastbereichen gefahren werden, beispielsweise bei reinen "Stadtfahrzeugen". Ablagerungen können die Reduktionsmitteldosierung beeinträchtigen, so dass sich der Homogenisierungsgrad verschlechtert und Reduktionsmittelschlupf auftreten kann. Bei besonders starker Ablagerung, insbesondere an der Eindosierungsstelle, kann im Extremfall die Dosierung vollständig behindert werden, was zu einem Systemausfall führen kann.

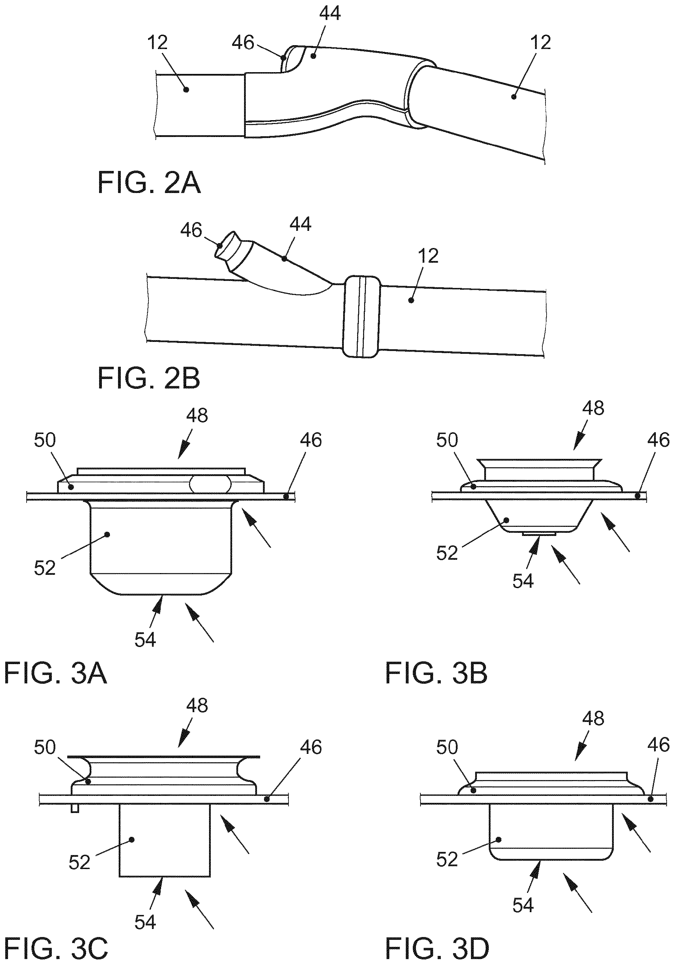

Figur 2 zeigt zwei Varianten einer Anschlussmöglichkeit einer Dosiereinrichtung an ein Abgasrohr 12, wie sie in bekannten Systemen zu finden sind. Dabei weist das Abgasrohr 12 jeweils einen Rohrstutzen 44 auf, welcher beispielsweise an das Abgasrohr 12 angeschweißt oder angeflanscht ist. Der Rohrstutzen 44 weist jeweils einen Aufnahmeabschnitt 46 auf, welcher der Aufnahme der hier nicht dargestellten Dosiereinrichtung dient. Typischerweise ist der Aufnahmeabschnitt 46 als ein Flansch, das heißt eine kragenartige Aufweitung des Rohrstutzens 44 ausgebildet, an welche die Dosiereinrichtung befestigt wird. Die in A und B gezeigten Varianten unterscheiden sich dadurch, dass das Abgasrohr 12 nach Figur 2B einen gradlinigen Verlauf aufweist, während in Figur 2A das Abgasrohr 12 ein Rohrknie ausbildet, an welchem der Rohrstutzen 44 so angebracht ist, dass das Reduktionsmittel mit einer Einspritzrichtung eingespritzt wird, die im Wesentlichen parallel zur Abgasstromrichtung (in der Darstellung von links nach rechts verlaufend) ausgerichtet ist.

Die in Figur 2 dargestellten Anordnungen sind insbesondere für Dosiereinrichtungen üblich, welche passiv luftgekühlt sind. Die Anordnung der Dosiereinrichtung in dem Rohrstutzen 44 schirmt das empfindlichen Dosierventil vor dem heißen Abgasstrom ab, um das Dosierventil thermisch von diesem zu entkoppeln.

Figur 3 A bis D zeigt aktiv gekühlte Dosiereinrichtungen 48, die über ein insbesondere flüssiges Kühlmittel gekühlt werden. Es ist ferner ein Teil des Aufnahmeabschnitts 46 gemäß Stand der Technik gezeigt, welcher die Dosiereinrichtung 48 in einer entsprechenden Durchgangsöffnung aufnimmt. Die Dosiereinrichtungen 48 verfügen jeweils über einen Anbindungssteg 50, bei dem es sich um eine kragenartige Aufweitung handelt, mittels der die Dosiereinrichtung 48 beispielsweise über nicht dargestellte Schraubverbindungen mit dem Aufnahmeabschnitt 46, der seinerseits als Flansch ausgebildet sein kann, verbunden wird. Die Dosiereinrichtungen 48 verfügen ferner über einen Kühlmantel 52, welcher ein innenliegendes, hier nicht sichtbares Dosierventil 54 umgibt, um dieses zu kühlen.

Problematisch an den, in den Figuren 2 und 3 gezeigten Anbindungen von Dosiereinrichtungen an einem Abgasrohr ist ihre Neigung, Ablagerungen des eingespritzten Reduktionsmittels zu fördern. Insbesondere im Bereich des Aufnahmeabschnitts 46 und dort vermehrt am Übergang zwischen Dosiereinrichtung 48 und Aufnahmeabschnitt 46 (siehe Pfeile in Figur 3) kommt es vermehrt zu Ablagerungserscheinungen. Ursache hierfür ist einerseits die Ausbildung von Störstellen und Totvolumina, an welchen sich bevorzugt ein Flüssigkeitsfilm absetzt, der später dauerhafte Ablagerungen ausbildet. Ferner beeinflusst der in das Abgasrohr hineinragende Abschnitt der Dosiereinrichtung 48 den Strömungsverlauf, wodurch es zu einer ungünstigen Ablenkung des Dosierstrahls kommt, welche wiederum die Ablagerungsbildung begünstigt.

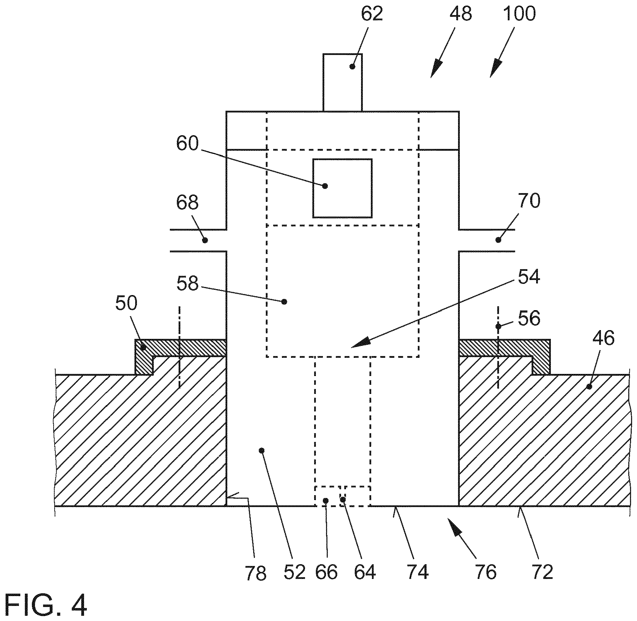

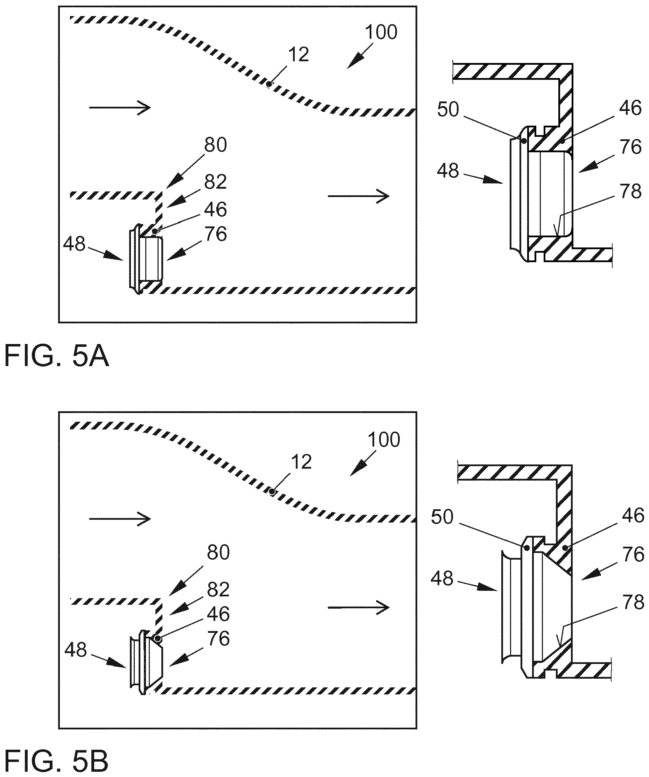

Dieser Problematik wird mit einer erfindungsgemäßen Abgasanlage 100 begegnet, welche gemäß einer bevorzugten Ausgestaltung der Erfindung in Figur 4 dargestellt ist. Figur 4 zeigt lediglich den Teil der Abgasanlage 100, welcher die Dosiereinrichtung 48 sowie ihre Anbindung an den Aufnahmeabschnitt 46 umfasst. Die Dosiereinrichtung 48 ist über ihren ringförmigen Anbindungssteg 50 an dem Aufnahmeabschnitt 46 befestigt, der vorzugsweise als ein Flanschanschluss ausgebildet ist (s.a. Figur 5). Beispielsweise ist die Dosiereinrichtung 48 über hier mit 56 angedeutete Schraubverbindungen mit dem Aufnahmeabschnitt 46 verschraubt.

Die Dosiereinrichtung 48 weist ein hier nicht näher dargestelltes Dosierventil 54 auf, welches einen vertikal beweglichen Ventilkörper umfasst, der von einer ebenfalls nicht dargestellten Spule 58 über einen elektrischen Anschluss 60 betätigt wird. Sobald die Spule 58 elektrisch erregt wird, hebt sich der Ventilkörper des Dosierventils 54 von seinem Ventilsitz, so dass das über einen hydraulischen Anschluss 62 zugeführte Reduktionsmittel über eine Einspritzöffnung 64 einer Spritzlochscheibe 66 in das Abgasrohr 12 eingespritzt wird.

Das Dosierventil 54 sowie die Spritzlochscheibe 66 sind von einem Kühlmantel 52 umgeben. Dieser weist einen nicht dargestellten Kühlmittelhohlraum auf, der mit Kühlmittelanschlüssen 68 und 70 in Verbindung steht. Über den Kühlmitteleingang 68 wird ein flüssiges Kühlmittel in den Kühlmantel 52 eingeleitet und über den Kühlmittelausgang 70 abgeleitet.

Erfindungsgemäß schließen eine abgasseitige Oberfläche 72 des Aufnahmeabschnitts 46 sowie eine abgasseitige Endfläche 74 der Dosiereinrichtung 48 bündig miteinander ab. Somit ragt weder die Endfläche 74 noch die Oberfläche 72 gegenüber dem jeweils anderen Element in Richtung des Abgasstroms hervor. Es wird also im Kontaktbereich zwischen der Dosiereinrichtung 48 (beziehungsweise ihres Kühlmantels 52) und dem Aufnahmeabschnitt 46 ein ebener, stufenloser Übergang gebildet. Auf diese Weise wird an dieser Stelle die Ausbildung von Störstellen oder Totvolumina verhindert, welche Ablagerungen des Reduktionsmittels begünstigen.

In Figur 4 ist ferner ersichtlich, dass in dem gezeigten Beispiel die abgasseitige Endfläche 74 der Dosiereinrichtung 48 sowie die abgasseitige Oberfläche 72 des Aufnahmeabschnitts 46 des Abgasrohrs 12 zusammengenommen eine durchgehende, dem Abgas zugewandte Fläche 76 ausbilden, welche eine stetige Kontur aufweist, das heißt - mit Ausnahme der Einspritzöffnung 64 - frei von Vorsprüngen, Sicken, Hinterschneidungen, Stufen und dergleichen ist. Somit bilden sämtliche, dem Abgas zugewandten Flächen der Dosiereinrichtung 48 und die abgasseitige Oberfläche 72 des Aufnahmeabschnitts 46 eine stetige durchgehende Fläche 76 aus. Im dargestellten Beispiel ist diese Fläche 76 als ebene Fläche ausgebildet.

Der Aufnahmeabschnitt 46 bildet ferner einen Dosiersitz 78 für die Dosiereinrichtung 48 aus, dessen Kontur einer äußeren Kontur des abgashaltigen Endabschnitts der Dosiereinrichtung 48 entspricht. Mit anderen Worten, bildet die Form des Dosiersitzes 78 die äußere Kontur der Dosiereinrichtung 48 nach, so dass die Kontaktfläche zwischen beiden im Wesentlichen lückenlos ausgeführt ist. Somit existiert zwischen Dosiereinrichtung 48 und Aufnahmeabschnitt 46 praktisch keinerlei Totvolumen. In dem in Figur 4 dargestellten Beispiel weisen die Kontur des Dosiersitzes 78 sowie die äußere Kontur der Dosiereinrichtung 48 jeweils eine einander entsprechende zylindrische Gestalt auf.

Figur 5 zeigt zwei weitere Abgasanlagen 100 gemäß der vorliegenden Erfindung, wobei die Dosiereinrichtung 48 in Figur 5A im Wesentlichen der Dosiereinrichtung aus Figur 3 D entspricht und die Dosiereinrichtung 48 in Figur 5B der Dosiereinrichtung aus Figur 3B. Auf der rechten Seite der Figuren 5A und B ist jeweils ein vergrößerter Ausschnitt dargestellt.

Das Abgasrohr 12 weist hier ein Rohrknie (oder Rohrvorsprung) 80 auf, welches einen orthogonal zur Hauptströmungsachse des Abgasrohrs 12 (angedeutet durch die horizontalen Pfeile) verlaufenden Abschnitt 82 ausbildet. Dabei ist die Dosiereinrichtung 48 im Bereich des orthogonalen Abschnitts 82 angeordnet. Auf diese Weise wird erreicht, dass die Einspritzachse der Dosiereinrichtung 48 parallel zu der Hauptströmungsachse des Abgasrohrs 12 ausgerichtet ist. Auf diese Weise wird der Strömungseinfluss des Abgases auf das Dosierspray der Dosiereinrichtung 48 sowie auf die Sekundärtropfen von diesen verringert. Es werden Ablenkungen des Dosiersprays auf die Wand des Abgasrohrs 12 vermieden und Ablagerungen entgegengewirkt.

Die erfindungsgemäße Abgasanlage in bevorzugter Ausführung zeichnet sich durch folgende Vorzüge aus:
- Minderung der Ablagerungsbildung durch Abbildung der äußeren Kontur der Dosiereinrichtung 48 durch den Dosiersitz 78 im Aufnahmeabschnitt 46 (Anbindungsflansch). Die Dosiereinrichtungskontur ist so abgebildet, dass die Spritzlochscheibe 66 auf gleicher Ebene liegt wie das Flanschende. Dadurch entstehen keine Schadräume, in denen sich Ablagerungen durch Rezirkulation und Ablenkung von Sekundärtropfen ausbilden könnten.
- Minderung der Ablagerungsbildung durch Vermeidung von Störstellen. Der Anbindungsflansch 46 sowie der Dosierbereich sind fei von Störstellen, wie Kanten, Sicken, Einprägungen usw., in denen sich ein Flüssigkeitsfilm ansammeln könnte.
- Minderung der Ablagerungsbildung durch Vermeidung von Strömungsbeeinflussung. Der Anbindungsflansch 46 ist so ausgelegt, dass keine Teile der Kontur der Dosiereinrichtung 48 über die Flanschebene in die Abgasanlage hineinragen, so dass sich ein möglichst geringe Strömungsverwirbelung im Dosierbereich ausbildet.
- Minderung der Ablagerungsbildung durch parallele Position des Anbindungsflansches zur Strömungsrichtung. Der Strömungseinfluss auf das Dosierspray sowie die Sekundärtropfen wird verringert.

### Bezugszeichenliste

- 100: Abgasanalage
- 10: Verbrennungskraftmaschine
- 12: Abgasrohr
- 14: SCR-Katalysator
- 16: Oxidationskatalysator
- 18: Mischelement
- 20: Hydrolysekatalysator
- 22: Oxidationskatalysator
- 24: NO_{X}-Sensor
- 26: NO_{X}-Sensor
- 28: Vorratslösung / wässrige Harnstofflösung
- 30: Vorratsbehälter
- 32: Förderleitung
- 34: Dosiereinrichtung
- 36: Förderpumpe
- 38: Temperatursensor
- 40: Belüftungseinrichtung
- 42: Steuergerät
- 44: Rohrstutzen
- 46: Aufnahmeabschnitt
- 48: Dosiereinrichtung
- 50: Anbindungssteg
- 52: Kühlmantel
- 54: Dosierventil
- 56: Schraubverbindung
- 58: Spule
- 60: elektrischer Anschluss
- 62: hydraulischer Anschluss
- 64: Einspritzöffnung
- 66: Spritzlochscheibe
- 68: Kühlmittelanschluss (Eingang)
- 70: Kühlmittelanschluss (Ausgang)
- 72: abgasseitige Oberfläche des Aufnahmeabschnitts
- 74: abgasseitige Endfläche der Dosiereinrichtung
- 76: Fläche
- 78: Dosiersitz
- 80: Rohrknie
- 82: orthogonaler Abschnitt

## Patentansprüche

1. Abgasanlage (100) umfassend ein zur Durchleitung eines Abgases ausgebildetes Abgasrohr (12) sowie eine Dosiereinrichtung (48) zur Dosierung eines flüssigen oder gasförmigen Reagenzes in das Abgasrohr (12), wobei das Abgasrohr (12) einen Aufnahmeabschnitt (46) zur Aufnahme der Dosiereinrichtung (48) aufweist und eine abgasseitige Oberfläche (72) des Aufnahmeabschnitts (46) und eine abgasseitige Endfläche (74) der Dosiereinrichtung (48) bündig miteinander abschließen, und wobei die Dosiereinrichtung (48) eine Spritzlochscheibe (66) aufweist und die abgasseitige Endfläche (74) der Dosiereinrichtung (48) zumindest teilweise durch die Spritzlochscheibe (66) ausgebildet wird, **dadurch gekennzeichnet, dass** eine Einspritzachse der Dosiereinrichtung (48) parallel zu einer Hauptströmungsachse des Abgasrohrs (12) ausgerichtet ist.

2. Abgasanlage (100) nach Anspruch 1, **dadurch gekennzeichnet, dass** die abgasseitige Endfläche (74) der Dosiereinrichtung (48) und die abgasseitige Oberfläche (72) des Aufnahmeabschnitts (46) zusammen eine durchgehend stetige, dem Abgas zugewandte Fläche (76) ausbilden.

3. Abgasanlage (100) nach Anspruch 2, **dadurch gekennzeichnet, dass** die durchgehende, dem Abgas zugewandte Fläche (76) als ebene Fläche ausgebildet ist.

4. Abgasanlage (100) nach einem der vorhergehenden Ansprüche, **dadurch gekennzeichnet, dass** der Aufnahmeabschnitt (46) einen Dosiersitz (78) für die Dosiereinrichtung (48) ausbildet, dessen Kontur einer äußeren Kontur eines abgasseitigen Endabschnitts der Dosiereinrichtung (48) entspricht.

5. Abgasanlage (100) nach einem der vorhergehenden Ansprüche, **dadurch gekennzeichnet, dass** die Dosiereinrichtung (48) eine Kühleinrichtung (52) zur aktiven Kühlung der Dosiereinrichtung (48) aufweist.

6. Abgasanlage (100) nach Anspruch 5, **dadurch gekennzeichnet, dass** die Kühleinrichtung als ein Kühlmantel (52) ausgebildet ist, welcher ein Dosierventil (54) der Dosiereinrichtung (48) umgibt und die abgasseitige Endfläche (74) der Dosiereinrichtung (48) zumindest teilweise durch ein abgasseitiges Ende des Kühlmantels (52) ausgebildet wird.

7. Abgasanlage (100) nach einem der vorhergehenden Ansprüche, **dadurch gekennzeichnet, dass** die Einspritzachse der Dosiereinrichtung (48) koaxial zu einer Hauptströmungsachse des Abgasrohrs (12) ausgerichtet ist.

8. Abgasanlage (100) nach einem der vorhergehenden Ansprüche, **dadurch gekennzeichnet, dass** das Abgasrohr (12) ein Rohrknie (80) aufweist und das Rohrknie (80) einen im Wesentlichen orthogonal zu einer Hauptströmungsachse des Abgasrohrs (12) verlaufenden Abschnitt (82) ausbildet, wobei der Aufnahmeabschnitt (46) im Bereich des orthogonalen Abschnitt (82) angeordnet ist.

9. Abgasanlage (100) nach einem der vorhergehenden Ansprüche, **dadurch gekennzeichnet, dass** die Abgasanlage (100) ferner einen, in dem Abgasrohr (12) stromab der Dosiereinrichtung (48) angeordneten SCR-Katalysator (14) umfasst.

10. Abgasanlage (100) nach einem der vorhergehenden Ansprüche, **dadurch gekennzeichnet, dass** das Reagenz ein SCR-Reduktionsmittel ist.

11. Abgasanlage (100) nach Anspruch 10, **dadurch gekennzeichnet, dass** das Reagenz Ammoniak (NH₃) oder eine Vorläuferverbindung von diesem ist.

12. Kraftfahrzeug, umfassend eine Abgasanlage (100) nach einem der vorhergehenden Ansprüche.

13. Kraftfahrzeug nach Anspruch 12, **gekennzeichnet durch** einen Dieselmotor als Antriebsquelle.

14. Kraftfahrzeug nach Anspruch 12 oder 13, **dadurch gekennzeichnet, dass** die Abgasanlage motornah angeordnet ist.

## Claims

1. Exhaust system (100) comprising an exhaust pipe (12) which is designed for conducting an exhaust gas and comprising a dosing device (48) for dosing a liquid or gaseous reagent into the exhaust pipe (12), wherein the exhaust pipe (12) has a receiving section (46) for receiving the dosing device (48), and an exhaust-gas-side surface (72) of the receiving section (46) and an exhaust-gas-side end surface (74) of the dosing device (48) terminate flush with one another, and wherein the dosing device (48) has a spray hole disc (66), and the exhaust-gas-side end surface (74) of the dosing device (48) is formed at least partially by the spray hole disc (66), **characterized in that** an injection axis of the dosing device (48) is oriented parallel to a main flow axis of the exhaust pipe (12).

2. Exhaust system (100) according to Claim 1, **characterized in that** the exhaust-gas-side end surface (74) of the dosing device (48) and the exhaust-gas-side surface (72) of the receiving section (46) together form a continuous surface (76) facing towards the exhaust gas.

3. Exhaust system (100) according to Claim 2, **characterized in that** the continuous surface (76) facing towards the exhaust gas is formed as a planar surface.

4. Exhaust system (100) according to one of the preceding claims, **characterized in that** the receiving section (46) forms a dosing seat (78) for the dosing device (48), the contour of which dosing seat corresponds to an outer contour of an exhaust-gas-side end section of the dosing device (48) .

5. Exhaust system (100) according to one of the preceding claims, **characterized in that** the dosing device (48) has a cooling device (52) for actively cooling the dosing device (48).

6. Exhaust system (100) according to Claim 5, **characterized in that** the cooling device is formed as a cooling jacket (52) which surrounds a dosing valve (54) of the dosing device (48), and the exhaust-gas-side end surface (74) of the dosing device (48) is formed at least partially by an exhaust-gas-side end of the cooling jacket (52).

7. Exhaust system (100) according to one of the preceding claims, **characterized in that** the injection axis of the dosing device (48) is oriented coaxially with respect to a main flow axis of the exhaust pipe (12).

8. Exhaust system (100) according to one of the preceding claims, **characterized in that** the exhaust pipe (12) has a pipe elbow (80), and the pipe elbow (80) forms a section (82) running substantially orthogonally with respect to a main flow axis of the exhaust pipe (12), wherein the receiving section (46) is arranged in the region of the orthogonal section (82).

9. Exhaust system (100) according to one of the preceding claims, **characterized in that** the exhaust system (100) furthermore comprises an SCR catalytic converter (14) arranged in the exhaust pipe (12) downstream of the dosing device (48).

10. Exhaust system (100) according to one of the preceding claims, **characterized in that** the reagent is an SCR reducing agent.

11. Exhaust system (100) according to Claim 10, **characterized in that** the reagent is ammonia (NH₃) or a precursor compound thereof.

12. Motor vehicle, comprising an exhaust system (100) according to one of the preceding claims.

13. Motor vehicle according to Claim 12, **characterized by** a diesel engine as drive source.

14. Motor vehicle according to Claim 12 or 13, **characterized in that** the exhaust system is arranged in a close-coupled position.

## Revendications

1. Système d'échappement (100) comprenant un tuyau d'échappement (12) configuré pour l'évacuation de gaz d'échappement ainsi qu'un dispositif de dosage (48) pour le dosage d'un réactif liquide ou gazeux dans le tuyau d'échappement (12), dans lequel le tuyau d'échappement (12) présente une partie de réception (46) destinée à recevoir le dispositif de dosage (48) et une surface côté gaz d'échappement (72) de la partie de réception (46) et une face d'extrémité côté gaz d'échappement (74) du dispositif de réception (48) se raccordent l'une à l'autre par affleurement, et dans lequel le dispositif de dosage (48) présente un disque perforé d'injection (66) et la face d'extrémité côté gaz d'échappement (74) du dispositif de dosage (48) est formée au moins en partie par le disque perforé d'injection (66), **caractérisé en ce qu'**un axe d'injection du dispositif de dosage (48) est orienté parallèlement à un axe d'écoulement principal du tuyau d'échappement (12).

2. Système d'échappement (100) selon la revendication 1, **caractérisé en ce que** la face d'extrémité côté gaz d'échappement (74) du dispositif de dosage (48) et la surface côté gaz d'échappement (72) de la partie de réception (46) forment ensemble une face continue ininterrompue (76) tournée vers le gaz d'échappement.

3. Système d'échappement (100) selon la revendication 2, **caractérisé en ce que** la face continue (76) tournée vers le gaz d'échappement est formée par une face plane.

4. Système d'échappement (100) selon l'une quelconque des revendications précédentes, **caractérisé en ce que** la partie de réception (46) forme un siège de dosage (78) pour le dispositif de dosage (48), dont le contour correspond à un contour extérieur d'une partie d'extrémité côté gaz d'échappement du dispositif de dosage (48).

5. Système d'échappement (100) selon l'une quelconque des revendications précédentes, **caractérisé en ce que** le dispositif de dosage (48) présente un dispositif de refroidissement (52) pour le refroidissement actif du dispositif de dosage (48).

6. Système d'échappement (100) selon la revendication 5, **caractérisé en ce que** le dispositif de refroidissement est formé par une chemise de refroidissement (52), qui entoure une soupape de dosage (54) du dispositif de dosage (48) et la face d'extrémité côté gaz d'échappement (74) du dispositif de dosage (48) est formée au moins en partie par une extrémité côté gaz d'échappement de la chemise de refroidissement (52).

7. Système d'échappement (100) selon l'une quelconque des revendications précédentes, **caractérisé en ce que** l'axe d'injection du dispositif de dosage (48) est disposé de façon coaxiale à l'axe d'écoulement principal du tuyau d'échappement (12).

8. Système d'échappement (100) selon l'une quelconque des revendications précédentes, **caractérisé en ce que** le tuyau d'échappement (12) présente un coude tubulaire (80) et le coude tubulaire (80) forme une partie (82) qui s'étend essentiellement orthogonalement à un axe d'écoulement principal du tuyau d'échappement (12), dans lequel la partie de réception (46) est disposée dans la région de la partie orthogonale (82).

9. Système d'échappement (100) selon l'une quelconque des revendications précédentes, **caractérisé en ce que** le système d'échappement (100) comprend en outre un catalyseur SCR (14) disposé dans le tuyau d'échappement (12) en aval du dispositif de dosage (48).

10. Système d'échappement (100) selon l'une quelconque des revendications précédentes, **caractérisé en ce que** le réactif est un agent réducteur SCR.

11. Système d'échappement (100) selon la revendication 10, **caractérisé en ce que** le réactif est l'ammoniac (NH₃) ou un composé précurseur de celui-ci.

12. Véhicule automobile, comprenant un système d'échappement (100) selon l'une quelconque des revendications précédentes.

13. Véhicule automobile selon la revendication 12, **caractérisé par** un moteur diesel comme source d'entraînement.

14. Véhicule automobile selon la revendication 12 ou 13, **caractérisé en ce que** le système d'échappement est disposé à proximité du moteur.
